# EUROPEAN PATENT SPECIFICATION

(11) **EP 1 983 516 B1**
(45) Date of publication and mention of the grant of the patent: **30.11.2011**
(21) Application number: 08007651.6
(22) Date of filing: 18.04.2008
(51) Int. Cl.: G11B 7/244, G11B 7/245, G11B 7/24, G11B 7/258, G11B 7/253, G11B 7/249

(54) **Optical recording composition and holographic recording medium**
Zusammensetzung zur optischen Aufzeichnung und holografisches Aufzeichnungsmedium
Composition d'enregistrement optique et support d'enregistrement holographique

(30) Priority: 19.04.2007 JP 2007110905
(43) Date of publication of application: 22.10.2008
(73) Proprietor: FUJIFILM Corporation, Minato-ku Tokyo (JP)
(72) Inventor: Yamada, Satoru, Ashigarakami-gun Kanagawa 258-8577 (JP)
(74) Representative: HOFFMANN EITLE

(56) References cited:
- JP-A- 1 113 287
- US-A- 4 959 284
- US-A1- 2004 077 882

## Description

### BACKGROUND OF THE INVENTION

### FIELD OF THE INVENTION

The present invention relates to an optical recording composition comprising a bicyclic cyclopropane derivative. More particularly, the present invention relates to an optical recording composition suited to the manufacturing of a holographic recording medium, particularly a volume holographic recording medium having a relatively thick recording layer. The present invention further relates to a holographic recording medium having a recording layer formed with the above optical recording composition.

### DISCUSSION OF THE BACKGROUND

Holographic optical recording media based on the principle of the holograph have been developed. Recording of information on holographic optical recording media is carried out by superposing an informing light containing image information and a reference light in a recording layer comprised of a photosensitive composition to write an interference fringe thus formed in the recording layer. During the reproduction of information, a reference light is directed at a prescribed angle into the recording layer in which the information has been recorded, causing optical diffraction of the reference light by the interference fringe which has been formed, reproducing the informing light

In recent years, volume holography, and, more particularly, digital volume holography, have been developed to practical levels for ultrahigh-density optical recording and have been garnering attention. Volume holography is a method of writing interference fringes three-dimensionally by also actively utilizing the direction of thickness of an optical recording medium. It is advantageous in that increasing the thickness permits greater diffraction efficiency and multiplexed recording increases the recording capacity. Digital volume holography is a computer-oriented holographic recording method in which the image data being recorded are limited to a binary digital pattern while employing a recording medium and recording system similar to those of volume holography, In digital volume holography, for example, image information such as an analog drawing is first digitized and then expanded into two-dimensional digital pattern information, which is recorded as image information. During reproduction, the digital pattern information is read and decoded to restore the original image information, which is displayed. Thus, even when the signal-to-noise (S/N) ratio deteriorates somewhat during reproduction, by conducting differential detection or conducting error correction by encoding the two-dimensional data, it is possible to reproduce the original data in an extremely faithful manner (see Japanese Unexamined Patent Publication (KOKAI) Heisel No. 11-311936 or English language family member US 2002/0114027 A1).

For example, Published Japanese Translation of a PCT International Application (TOKUHYO) No. 2005-502918 or English language family member WO 03/023519 disclose the use of a urethane matrix and a phenyl acrylate derivative in a holographic optical recording medium of the photopolymer type. However, with common photopolymers, the polymerization of monomers is accompanied by volumetric shrinkage. Volumetric shrinkage causes a reduction in recording capacity, U.S. Patent No. 4,959,284 proposes the formation of a recording layer using radical ring-opening polymerization to enhance storage capacity. However, even this does not afford adequate storage capacity. The volumetric shrinkage is problematic in that it distorts the recording interference fringe, producing errors during data input and output and compromising recording and reproducing precision.

### SUMMARY OF THE INVENTION

An aspect of the present invention provides for an optical recording composition suited to high-sensitivity digital volume holography with large storage capacity, and for a holographic recording medium permitting ultrahigh-density optical recording using the above optical recording composition.

As the result of extensive research, the present inventor discovered that the use of the bicyclic cyclopropane derivative denoted by General Formula (I) below as recording monomer permitted recording with greater sensitivity and large recording capacity.

An aspect of the present invention relates to an optical recording composition comprising a bicyclic cyclopropane derivative denoted by General Formula (1).

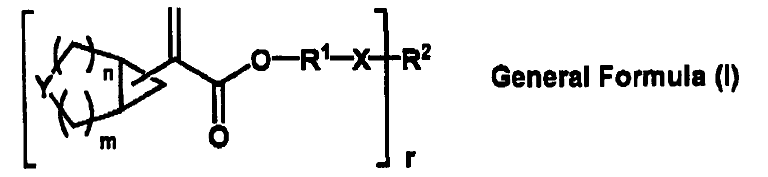

In General Formula (I), R¹ denotes an alkylene group or arylene group, R² denotes an alkyl group, aryl group, or heterocyclic group, X denotes a divalent linking group selected from the group consisting of -COO-, -CONH-, -OCO-, -NH-, -O-, -S-, -CO-, -SO₂-, -SO₃-, and -SO₂NH-, n and m each independently denote an integer ranging from 0 to 8, with n+m being an integer ranging from 0 to 8, Y denotes a divalent linking group selected from the group consisting of -CR⁹R⁴-, -O-, and -S-, R³ and R⁴ each independently denote a hydrogen atom, alkyl group, aryl group, alkoxycarbonyl group, or aryloxycarbonyl group, r denotes an integer ranging from 1 to 4, wherein there may be a case in which R¹ and X are absent, and R² is directly bound to an oxygen atom in the case.

The bicyclic cyclopropane derivative denoted by General Formula (1) may be a bicyclic cyclopropane derivative denoted by General Formula (II).

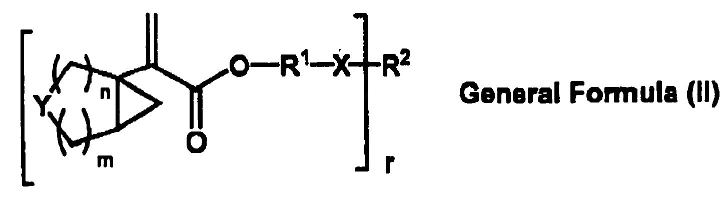

In General Formula (II), each of R¹, R², Y, n, m, and r is defined in the same manner as in General Formula (I).

In general formulas (I) and (II), r may denote an integer ranging from 2 to 4.

In general formulas (I) and (II), R¹ or R² may denote an aryl group,

The optical recording composition may further comprises a thermosetting compound.

The thermosetting compound may comprise a polyfunctional isocyanate and a polyfunctional alcohol.

The optical recording composition may further comprises an optical radical polymerization initiator.

The optical recording composition may be a holographic recording composition.

A further aspect of the present invention relates to a holographic recording medium comprising a recording layer, wherein the recording layer is formed with the above optical recording composition.

The holographic recording medium of the present invention permits ultrahigh-density recording and is particularly suited as a recording medium for digital volume holography permitting the use of inexpensive lasers and capable of reducing the time required for writing.

Other exemplary embodiments and advantages of the present invention may be ascertained by reviewing the present disclosure and the accompanying drawings.

### BRIEF DESCRIPTION OF THE DRAWINGS

The present invention will be described in the following text by the exemplary, non-limiting embodiments shown in the figures, wherein:
Fig. 1 is a schematic cross-sectional view of an example of a holographic recording medium according to a first implementation embodiment.
Fig. 2 is a schematic cross-sectional view of an example of a holographic recording medium according to a second implementation embodiment.
Fig. 3 is a drawing descriptive of an example of an optical system permitting recording and reproducing of information on a holographic recording medium.
Fig. 4 is a block diagram showing an example of the overall configuration of a recording and reproducing device suited to use in recording and reproducing information on the holographic recording medium of the present invention.

Explanations of symbols in the drawings are as follows:
- 1: Lower substrate
- 2: Reflective film
- 3: Servo pit pattern
- 4: Recording layer
- 5: Upper substrate
- 6: Filter layer
- 7: Second gap layer
- 8: First gap layer
- 12: Objective lens
- 13: Dichroic mirror
- 14: Detector
- 15: 1/4 wavelength plate
- 16: Polarizing plate
- 17: Half mirror
- 20: Holographic recording medium
- 21: Holographic recording medium
- 22: Holographic recording medium
- 31: Pickup
- 81: Spindle
- 82: Spindle motor
- 83: Spindle servo circuit
- 84: Driving device
- 85: Detection circuit
- 86: Focus servo circuit
- 87: Tracking servo circuit
- 88: Slide servo circuit
- 89: Signal processing circuit
- 90: Controller
- 91: Operation element
- 100: Optical recording and reproducing device
- A: Entry and exit surface
- FE: Focus error signal
- TE: Tracking error signal
- RF: Reproduction signal

### DESCRIPTIONS OF THE EMBODIMENTS

The following preferred specific embodiments are, therefore, to be construed as merely illustrative, and non-limiting to the remainder of the disclosure in any way whatsoever. In this regard, no attempt is made to show structural details of the present invention in more detail than is necessary for fundamental understanding of the present invention; the description taken with the drawings making apparent to those skilled in the art how several forms of the present invention may be embodied in practice.

### HOLOGRAPHIC RECORDING COMPOSITION

The optical recording composition of the present invention comprises at least a bicyclic cyclopropane derivative denoted by General Formula (1), is preferably employed as a holographic recording composition, and is particularly suitable as a volume holographic recording composition. As set forth above, holographic recording is a method of recording information by superposing an informing light containing information and a reference light in a recording layer to write an interference fringe thus formed in the recording layer. Volume holographic recording is a method of recording information in holographic recording in which a three-dimensional interference image is written in the recording layer.
The individual components comprised in the optical recording composition of the present invention will be described below.

### Bicyclic cyclopropane derivative denoted by General Formula (1)

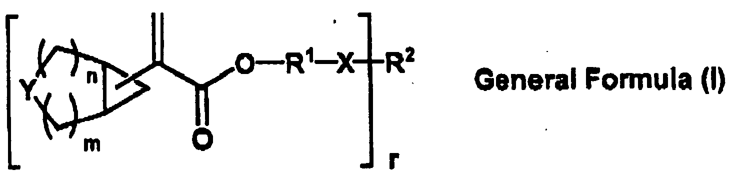

In General Formula (I), R¹ denotes an alkylene group or arylene group, R² denotes an alkyl group, aryl group, or heterocyclic group, X denotes a divalent linking group selected from the group consisting of -COO-, -CONH-, -OCO-, -NH-, -O-, -S-, -CO-, -SO₂-, -SO₃-, and -SO₂NH-, n and m each independently denote an integer ranging from 0 to 8, with n+m being an integer ranging from 0 to 8, Y denotes a divalent linking group selected from the group consisting of -CR³R⁴-, -O-, and -S-, R³ and R⁴ each independently denote a hydrogen atom, alkyl group, aryl group, alkoxycarbonyl group, or aryloxycarbonyl group, r denotes an integer ranging from 1 to 4, wherein there may be a case in which R¹ and X are absent, and R² is directly bound to an oxygen atom in the case.

Details of General Formula (I) will be described below.

In General Formula (I), R¹ denotes an alkylene group or arylene group.

In General Formula (I), the alkylene group denoted by R¹ may be linear or branched and may be substituted or unsubstituted. It preferably comprises 1 to 30 carbon atoms, more preferably 1 to 20 carbon atoms. Divalent functional groups may be present in the alkylene chain in such a manner as to not be mutually adjacent. Such divalent functional groups are preferably -O- and -S-, with -O- being more preferable.

The arylene group denoted by R¹ in General Formula (I) may be substituted, with 6 to 30 carbon atoms being preferable and 6 to 20 carbon atoms being more preferable. Divalent functional groups may be present in the arylene chain in such a manner as to not be mutually adjacent. Such divalent functional groups are preferably -0- and -S-, with -O- being more preferable.

In General Formula (I), R² denotes an alkyl group, aryl group, or heterocyclic group.

The alkyl group denoted by R² in General Formula (I) may be linear or branched and may be substituted or unsubstituted. It preferably comprises 1 to 30 carbon atoms, more preferably 1 to 20 carbon atoms. Examples of such alkyl groups are a methyl group, ethyl group, normal propyl group, isopropyl group, normal butyl group, isobutyl group, tertiary butyl group, pentyl group, cyclopentyl group, hexyl groups, cyclohexyl group, heptyl group, octyl group, tertiary octyl group, 2-ethylhexyl group, decyl group, dodecyl group, octadecyl group, 2,3-dibromopropyl group, adamantyl group, benzyl group, or 4-bromobenzyl group. These may be further substituted.

The aryl group denoted by R² in General Formula (I) may be substituted or unsubstituted. It preferably comprises 6 to 30 carbon atoms, more preferably 6 to 20 carbon atoms. Examples are a phenyl group, naphthyl group, and anthranyl group. These may be further substituted.

The heterocyclic group denoted by R² in General Formula (1) is preferably a heterocyclic group with 4 to 14 carbon atoms, more preferably 4 to 10 carbon atoms, and still more preferably, 5 carbon atoms. Specific examples of the heterocyclic group denoted by R² are a pyridine ring, piperazine ring, thiophene ring, pyrrole ring, imidazole ring, oxazole ring, and thiazole ring. These may be further substituted. Of these heterocycles, a pyridine ring is particularly preferable.

In General Formula (I), one from among R¹ and R² is preferably an aryl group.

In General Formula (I), X denotes a divalent linking group selected from the group consisting of -COO-, -CONH-, -OCO-, -NH-, -O-, -S-, -CO-, -SO₂-, -SO₃-, and -SO₂NH-, Of these, -COO-, -CONH-, -OCO-, -NH-, -O-, -S-, and -CO- are preferable, and -COO- is more preferable.

In General Formula (I), n and m each independently denote an integer ranging from 0 to 8, with n+m being limited to an integer ranging from 0 to 8. n+m preferably denotes an integer ranging from 1 to 5, and more preferably, denotes 2.

In General Formula (I), Y denotes a divalent linking group selected from the group consisting of -CR³R⁴-, -0-, and -S-, with -CR³R⁴- and -S- being preferable and -CR³R⁴- being more preferable.

In -CR³R⁴-, R³ and R⁴ each independently denote a hydrogen atom, alkyl group, aryl group, allxycarbonyl group, or aryloxycarbonyl group.
Details regarding alkyl groups and aryl groups denoted by R³ and R⁴ are as set forth above for the alkyl group and aryl group denoted by R²,

Examples of alkoxycarbonyl groups denoted by R³ and R⁴ are methyloxycarbonyl groups, ethyloxycarbonyl groups, normal propyloxycarbonyl groups, isopropyloxycarbonyl groups, normal butyloxycarbonyl groups, isobutyloxycarbonyl groups, tertiary butyloxycarbonyl groups, pentyloxycarbonyl groups, cyclopentyloxycarbonyl groups, hexyloxycerbonyl groups, cyclohexyloxycarbonyl groups, heptyloxycarbonyl croups, octyloxycarbonyl groups, tertiary octyloxycarbonyl groups, 2-ethylhexyloxycarbonyl groups, decyloxycarbonyl groups, and dodecyloxyc4rbonyt groups. These may be further substituted.

Examples of aryloxycarbonyl groups denoted by R³ and R⁴ are phenyloxycarbonyl groups, naphthyloxycarbonyl groups, and anthranyloxycarbonyl groups. These may be further substituted.

Examples of the substituent optionally comprised in the group denoted by R², R³, or R⁴ are; a halogen atom, alkyl group, alkenyl group, alkoxy group, aryloxy group, alkylthio group, alkoxycarbonyl group, and aryloxycarbonyl group. Of these, a halogen atom, alkoxy group, or alkylthio group is particularly preferable. The bicyclic cyclopropane denoted by General Formula (I) is a polyfunctional compound when a bicyclic cyclopropane structure is linked as a substituent.

In General Formula (I), r denotes an integer ranging from 1 to 4, preferably an integer ranging from 2 to 4, more preferably 2 or 3, and still more preferably, 2.

General Formula (II) below is an example of a preferable embodiment of the bicyclic cyclopropane derivative denoted by General Formula (I).

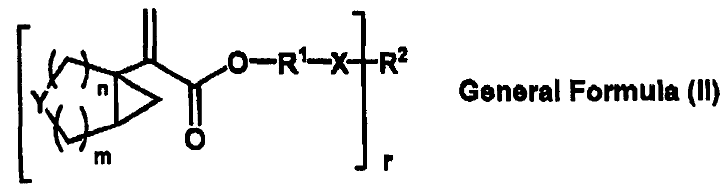

In General Formula (II), each of R¹, R², Y, n, m, and r is defined in the same manner as in General Formula (I), with the details such as preferable embodiments being as set forth above.

There is a case in which R¹ and X in General Formula (I) are absent. In such a case, the bicyclic cyclopropane derivative has the structure denoted by General Formula (I)-1 below, where R² is directly bound to an oxygen atom. There is also a case in which R¹ and X in General Formula (II) are absent. In such a case, the bicyclic cyclopropane derivative has the structure denoted by General Formula (II)-1, where R² is directly bound to an oxygen atom.

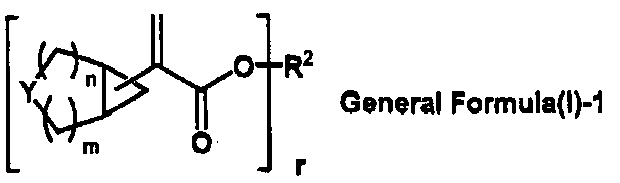

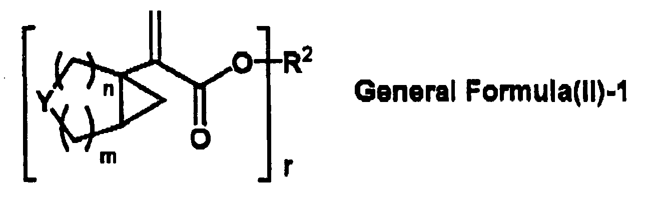

In General Formulas (I)-1 and (II)-2, each of R², Y, n, m, and r is defined in the same manner as in General Formula (I), with the details such as the preferable embodiments being as set forth above.

In the bicyclic cyclopropane derivative denoted by General Formula (I), the embodiment denoted by General Formula (I)-1 above, in which R¹ and X in General Formula (I) are absent, is preferable; the embodiment denoted by General Formula (II)-1 is more preferable; and the embodiments of General Formulas (I)-1 and (II)-1 in which R² denotes an aryl group, Y denotes -CH₂- or -O-, r denotes 2, n denotes 1, and m denotes 1 are of still greater preference.

Specific examples of the bicyclic cyclopropane derivative denoted by General Formula (I) will be described below. However, the present invention is not limited to the specific examples given below.

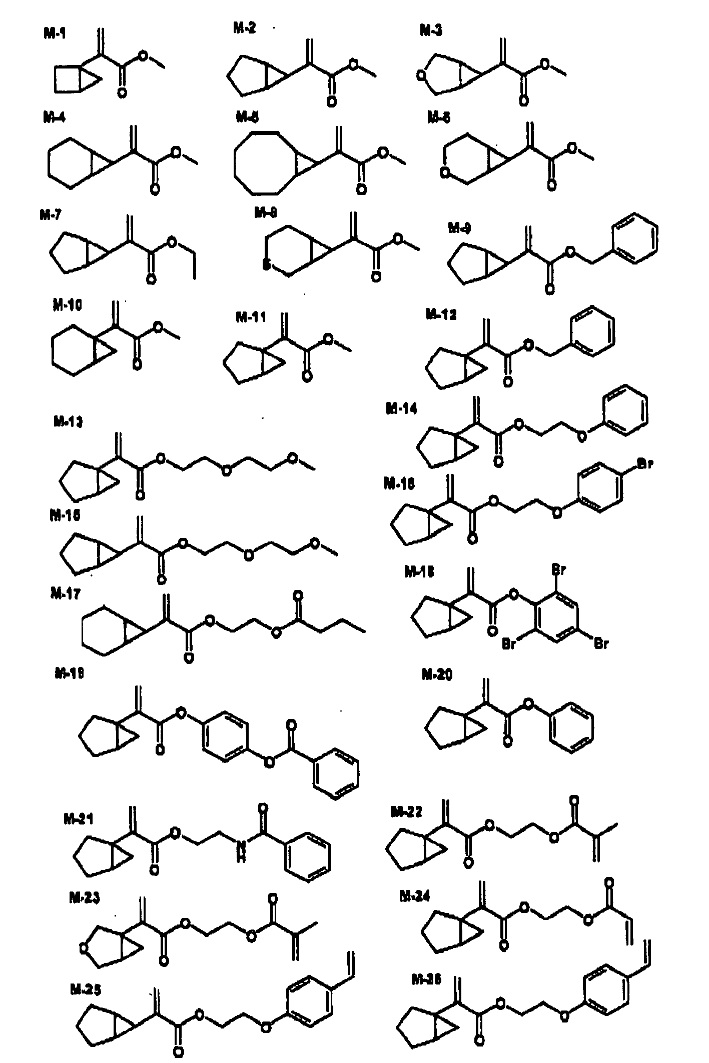

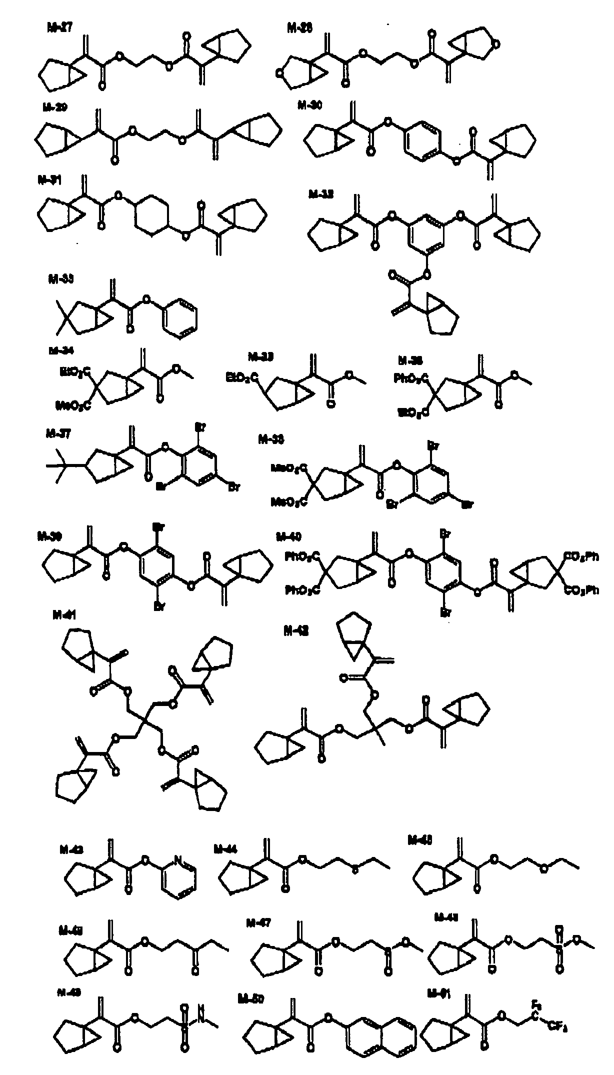

Methods of synthesizing the compound denoted by General Formula (I) set forth above are described in detail in, for example, US 2004/0077882; Macromol. Rapid Commun. 2003, 24, 269; Macromol. Mater. Eng. 2006,291,83; Adv. Synth. Catal. 2006, 348, 2133; and the like. Examples described further below may also be referred for synthesis methods.

The optical recording composition of the present invention comprises at least one bicyclic cyclopropane derivative denoted by General Formula (1). A single bicyclic cyclopropane derivative denoted by General Formula (I) may be employed, or two or more such derivatives may be employed in combination, The content of the bicyclic cyclopropane derivative denoted by General Formula (I) in the optical recording composition of the present invention is not specifically limited and may be suitably selected based on the objective. 1 to 50 weight percent is preferable, 1 to 30 weight percent is more preferable, and 3 to 10 weight percent is of even greater preference. When the content of the bicyclic cyclopropane derivative denoted by General Formula (I) is equal to or lower than 50 weight percent, the stability of the interference image is readily ensured, and at equal to or higher than 1 weight percent, properties that are desirable from the perspective of diffraction efficiency can be achieved.

### Optical polymerization initiator

The bicyclic cyclopropane derivative denoted by General Formula (I) can function as a recording monomer in the optical recording composition of the present invention. The optical recording composition of the present invention may comprise an optical polymerization initiator in addition to the bicyclic cyclopropane derivative denoted by General Formula (I). The optical polymerization initiator is not specifically limited so long as it has sensitivity to the recording beam; an optical radical polymerization initiator, cationic polymerization initiator, or the like may be employed. From the viewpoint of the efficiency of the polymerization reaction, an optical radical polymerization initiator is preferable.

Examples of optical radical polymerization initiators are: 2,2'-bis(o-chlorophenyl)-4,4',5,5'-tetraphenyl-1,1'-blimldazole, 2,4,6-tris(trichloromethyl)-1,3,5-triazine, 2,4-bis(trichloromethyl)-6-(p-methoxyphenylvinyl)-1,3,5-triazine, diphenyliodoniumtetrafluoroborate, diphenyliodoniumhexafluorophosphate, 4,4'-di-t-butyldiphenyliodoniumtetrafluoroborate, 4-diethylaminophenylbenzenediazoniumhexafluorophosphate, benzoin 2-hydroxy-2-methyl-1-phenylpropane-2-one, benzophenone, thioxanthone, 2,4,6-trimethylbenzoyl diphenylacyl phosphine oxide, triphenylbutylborate tetraethyl ammonium, and bis(η5-2,4-cyclopentadiene-1-yl)bis[2,6-difluoro-3-(1H-pyrrole-1-yl)phenyltitanium. These may be employed singly or in combinations of two or more. A sensitizing dye, described further below, may also be employed in combination based on the wavelength of the light being irradiated.

Examples of cationic polymerization initiators are: 2,4,6-tris(trichloromethyl)-1,3,5-triazine, 2,4-bis(trichloromethyl)-6-(p-methoxyphenylvinyl)-1,3,5-triazine, phenyliodonium tetrafluoroborate, diphenyliodonium hexafluorophosphate, 4,4'-di-t-butyidiphenyliodonium tetrafluoroborate, 4-diethylamlnophenylbenzenediazonium hexafluorophosphate, tetraethylammonium triphenylbutylborate, and diphenyl-4-phenylthiophenylsulfonium hexafluorophosphate.

The content of the optical polymerization initiator in the optical recording composition of the present invention is preferably 0.01 to 5 weight percent, more preferably 1 to 3 weight percent.

### Matrix-forming component

The recording layer of an optical recording medium normally comprises a polymer to hold the optical polymerization initiator and monomers related to the recording and storage, known as a matrix. The matrix can be employed for achieving enhanced coating properties, coating strength, and hologram recording characteristics. The optical recording composition of the present invention can comprise matrix forming components in the form of curing compounds, Thermosetting compounds and light-curing compounds employing catalysts and the like that cure when irradiated with light may be employed as these curing compounds. Thermosetting compounds are preferable.

The thermosetting matrix comprised in the recording layer is not specifically limited and may be suitably selected based on the objective. Examples are urethane resins formed from isocyanate compounds and alcohol compounds; epoxy compounds formed from oxysilane compounds; melamine compounds; formalin compounds; ester compounds of unsaturated acids such as (meth)acrylic acid and itaconic acid; and polymers obtained by polymerizing amide compounds, Of these, polyurethane matrices formed from isocyanate compounds and alcohol compounds are preferable. In consideration of recording retention properties, three-dimensional polyurethane matrices formed from polyfunctional isocyanates and polyfunctional alcohols are particularly preferred.
Specific examples of polyfunctional isocyanates and polyfunctional alcohols capable of forming polyurethane matrices are described below.

Examples of such polyfunctional isocyanates are: biscyclohexylmethane diisocyanate, hexamethylene diisocyanate, phenylene-1,3-diisocyanate, phenytene-1,4-diisoryanate, 1-methoxyphenylene-2,4-diisocyanate, 1-methylphenylena-2,4-diisocyanate, 2,4-tolylene diisocyanate, 2,6-tolylene diisocyanate, 1,3-xylylene diisocyanate, 1,4-xylylene diisocyanate, biphenylene-4,4'-diisoeyatrate, 3,3'-dimethoxybiphenylene-4,4'-diisocyanate, 3,3'-dimethylbiphenylene-4,4'-diisocyanate, diphenylmeuiane-2,4'-diisocyanate, diphenylmetime-4,4'-diisocyanate, 3,3'-dimethoxydiphenylmethane-4,4'-diisocyanate, 3,3'-dimethyldiphenylmethane-4,4'-diisocyanate, naphthylene-1,5-diisocyanate, cyclobutylene-1,3-diisocyanate, cyclopentylene-1,3-diisocyanate, cyclohexylene-1,3-diisocyanate, cyclohexylene-1,4-diisocyanate, 1-methylcyclohexylene-2,4-diisocyanate, 1-mothylcyclohexylene-2,6-diisocynate, 1-isocyanata-3,3,5-trimethyl-5-isocyanate methylcyclohexane, cyclohexane-1,3-bis(mothylisocyanate), eyclohexane-1,4-bis(methylisocyanate), isophorone diisocyanate, dicyclohexylmethane-2,4'-diisocyanate, dicyclohexylmethane-4,4'-diisocyanate, ethylene diisocyanate, tetramethylene-1,4-diisocyanate, hexamethylene-1,6-diisocyanate, dodecamethylene-1,12-diisocyanate, phanyt-1,3,5-triisocyanate, diphenylmethane-2,4,4'-triisocyanate, diphenylmethane-2,5,4'-triisocyanate, triphenylmethane-2,4',4"-triisocyanate, triphenylmethane-4,4',4"-triisocyanate, diphenylmethane-2,4,2',4'-tetraisocyanate, diphenylmethane-2,5,2',5'-tetWsocyanate, cyclohexana-1,3,5-triisocyanate, cyclohexane-1,3,5-tris(methylisocyanate), 3,5-dimethylcyclohexane-1,3,5-tris(methylisocyanate), 1,3,5-trimethylcyclohexane-1,3,5-tris(methylisocyanate), dicyclohexylmethane-2,4,2'-triisocyanate, dicyclohexylmethane-2,4,4'-trüsocyanate lysine isocyanate methyl ester, and prepolymers having isocyanates on both ends obtained by reacting a stoichiometrically excess quantity of one or more of these organic isocyanate compounds with a polyfunctional active hydrogen-containing compound. Of these, biscyclohexylmethane diisocyanate and hexamethylene diisocyanate are preferred. They may be employed singly or in combinations of two or more.

The above polyfunctional alcohols may be in the form of a single polyfunctional alcohol, or in the form of a mixture with other polyfunctional alcohols. Examples of these polyfunctional alcohols are: glycols such as ethylene glycol, triethylene glycol, diethylene glycol, polyethylene glycol, propylene glycol, polypropylene glycol, and neopentyl glycol; diols such as butanediol, pentanediol, hexanediol, heptanediol, and tetramethylene glycol; bisphenols; compounds in the form of these polyfunctional alcohols modified by polyethyleneoxy chains or polypropyleneoxy chains; and compounds in the form of these polyfunctional alcohols modified by polyethyleneoxy chains or polypropyleneoxy chains, such as glycerin, trimethylolpropane, butanetriol, pentanetriol, hexanetriol, docanetriol, and other triols.

The content of the matrix-forming compound in the optical recording composition of the present invention is preferably 10 to 95 weight percent, more preferably 35 to 90 weight percent. When this content is equal to or greater than 10 weight percent, a stable interference image can be readily obtained, and when equal to or less than 95 weight percent, properties that are desirable from the perspective of diffraction efficiency can be obtained.

### Other components

Polymerization Inhibitors and oxidation inhibitors may be added to the optical recording composition of the present invention to improve the storage stability of the optical recording composition, as needed.
Examples of polymerization inhibitors and oxidation inhibitors are: hydroquinone, p-benzoquinone, hydroquinone monomethyl ether, 2,6-ditert-butyl-p-cresol, 2,2'-methylenebis(4-methyl-6-tert-butylphenol), triphenylphosphite, trisnonylphenylphoshite, phenothiazine, and N-isopropyl-N'-phenyl-p-phenylenediamine.
The quantity of polymerization Inhibitor or oxidation inhibitor added is preferably equal to or less than 3 weight percent of the total quantity of recording monomer. When the quantity added exceeds 3 weight percent, polymerization may slow down, and in extreme cases, ceases.

As needed, a sensitizing dye may be added to the optical recording composition of the present invention. Known compounds such as those described in "Research Disclosure, Vol. 200, 1980, December, Item 20036" and "Sensitizers" (pp. 160-163, Kodansha, ed, by K. Tokumaru and M. Okawara, 1987) and the like may be employed as sensitizing dyes.
Specific examples of sensitizing dyes are: 3-ketocoumarin compounds described in Japanese Unexamined Patent Publication (KOKAI) Showa No. 58-15603; thiopyrilium salt described in Japanese Unexamined Patent Publication (KOKAI) Showa No. 58-40302; naphthothiazole merocyanine compounds described in Japanese Examined Patent Publications (KOKOKU) Showa Nos. 59-28328 and 60-53300; and merocyanine compounds described in Japanese Examined Patent Publications (KOKOKU) Showa Nos. 61-9621 and 62-3842 and Japanese Unexamined Patent Publications (KOKAI) Showa Nos. 59-89303 and 60-60104.
Further examples are the dyes described in "The Chemistry of Functional Dyes" (1981, CMC Press, pp. 393.416) and "Coloring Materials" (60 [4] 212-224 (1987)). Specific examples are cationic methine dyes, cationic carbonium dyes, cationic quinoneimine dyes, cationic indoline dyes, and cationic styryl dyes.
Further, keto dyes such as coumarin (including ketocoumarin and sulfonocoumarin) dyes, merostyryl dyes, oxonol dyes, and hemioxonol dyes; nonketo dyes such as nonketo polymethine dyes, triarylmethane dyes, xanthene dyes, anthracene dyes, rhodamine dyes, acrylidine dyes, aniline dyes, and azo dyes; nonketo polymethine dyes such as azomethine dyes, cyanine dyes, carbocyanine dyes, dicarbocyanine dyes, tricarbocyanine dyes, hemicyanine dyes, and styryl dyes; and quinone imine dyes such as azine dyes, oxazine dyes, thiazine dyes, quinoline dyes, and thiazole dyes are included among the spectral sensitizing dyes.
These sensitizing dyes may be employed singly or in combinations of two or more.

A photo-heat converting material can be incorporated into the optical recording composition of the present invention for enhancing the sensitivity of the recording layer formed with the optical recording composition.
The photo-heat converting material is not specifically limited, and may be suitably selected based on the functions and properties desired. For example, for convenience during addition to the recording layer with the photopolymer and so as not to scatter incident light, an organic dye or pigment is desirable. From the perspectives of not absorbing and not scattering light from the light source employed in recording, infrared radiation-absorbing dyes are desirable.
Such infrared radiation-absorbing dyes are not specifically limited, and may be suitably selected based on the objective. However, cationic dyes, complex-forming dyes, quinvne-bassd neutral dyes, and the like are suitable. The maximum absorption wavelength of the infrared radiation-absorbing dye preferably falls within a range of 600 to 1,000 nm, more preferably a range of 700 to 900 nm.
The content of infrared radiation-absorbing dye in the optical recording composition of the present invention can be determined based on the absorbance at the wavelength of maximum absorbance in the infrared region in the recording medium formed with the optical recording composition of the present invention. This absorbance preferably falls within a range of 0.1 to 2.5, more preferably a range of 0.2 to 2.0.

As needed, the optical recording composition of the present invention may comprise a component that can diffuse into the inverse direction with that of the polymerizable components in order to reduce the volume change at polymerization, or a compound having an acid cleavage configuration may be added to the holographic recording composition in addition to the polymers.

The optical recording composition of the present invention can be employed as various holographic recording compositions capable of recording information when irradiated with a light containing information. In particular, it is suited to use as a volume holographic recording composition.
The recording layer can be formed by casting when the viscosity of the optical recording composition is adequately low When the viscosity is so high that casting is difficult, a dispenser can be employed to spread a recording layer on a lower substrate, and an upper substrate pressed onto the recording layer so as to cover it and spread it over the entire surface, thereby forming a recording medium.

### HOLOGRAPHIC RECORDING MEDIUM

The holographic recording medium of the present invention comprises a recording layer formed with the optical recording composition of the present invention. For example, the recording layer comprised of the optical recording composition of the present invention can be formed by the above-described method.

The holographic recording medium of the present invention comprises the above recording layer (holographic recording layer), and preferably comprises a lower substrate, a filter layer, a holographic recording layer, and an upper substrate. As needed, it may comprise additional layers such as a reflective layer, filter layer, first gap layer, and second gap layer.

The holographic recording medium of the present invention is capable of recording and reproducing information through utilization of the principle of the hologram. This may be a relatively thin planar hologram that records two-dimensional information or the like, or a volumetric hologram that records large quantities of information, such as three-dimensional images. It may be either of the transmitting or reflecting type. Since the holographic recording medium of the present invention is capable of recording high volumes of information, it is suitable for use as a volume holographic recording medium of which high recording density is demanded.

The method of recording a hologram on the holographic recording medium of the present invention is not specifically limited; examples are amplitude holograms, phase holograms, blazed holograms, and complex amplitude holograms. Among these, a preferred method is the so-called "collinear method" in which recording of information in volume holographic recording regions is carried out by irradiating an informing light and a reference light onto a volume holographic recording area as coaxial beams to record information by means of interference pattern through interference of the informing light and the reference light.

Details of substrates and various layers that can be incorporated into the holographic recording medium of the present invention will be described below.

### - Substrate -

The substrate is not specifically limited in terms of its shape, structure, size, or the like; these may be suitably selected based on the objective. For example, the substrate may be disk-shaped, card-shaped, or the like. A substrate of a material capable of ensuring the mechanical strength of the holographic recording medium can be suitably selected. When the light employed for recording and reproducing enters after passing through the substrate, a substrate that is adequately transparent at the wavelength region of the light employed is desirable.

Normally, glass, ceramic, resin, or the like is employed as the substrate material. From the perspectives of moldability and cost, resin is particularly suitable. Examples of such resins are: polycarbonate resin, acrylic resin, epoxy resin, polystyrene resin, acrylonitrile - styrene copolymers, polyethylene resin, polypropylene resin, silicone resin, fluorine resin, ABS resin, and urethane resin. Of these, from the perspective of moldability, optical characteristics, and cost, polycarbonate resin and acrylic resin are preferred. Synthesized resins and commercially available resins may both be employed as substrates.

Normally, address servo areas are provided on the substrate at prescribed angular intervals as multiple positioning areas extending linearly in a radial direction, with the fan-shaped intervals between adjacent address servo areas serving as data areas. Information for operating focus servos and tracking servos by the sampled servo method, as well as address information, is recorded (preformatted) as pre-embossed pits (servo pits) or the like in address servo areas. Focus servo operation can be conducted using the reflective surface of a reflective film. Wobble pits, for example, can be employed as information for operating a tracking servo. When the holographic recording medium is card-shaped, it is possible not to have a servo pit pattern.

The thickness of the substrate is not specifically limited, and may be suitably selected based on the objective: a thickness of 0.1 to 5 mm is preferable, with 0.3 to 2 mm being preferred. A substrate thickness of equal to or greater than 0.1 mm is capable of preventing shape deformation during disk storage, while a thickness of equal to or less than 5 mm can avoid an overall disk weight generating an excessive load on the drive motor.

### - Recording Layer -

The recording layer can be formed with the optical recording composition of the present invention and is capable of recording Information by holography. The thickness of the recording layer is not specifically limited, and may be suitably selected based on the objective. A recording layer thickness falling within a range of 1 to 1,000 micrometers yields an adequate S/N ratio even when conducting 10 to 300 shift multiplexing, and a thickness falling within a range of 100 to 700 micrometers is advantageous in that it yields a markedly good S/N ratio.

### Reflective Film.

A reflective film can be formed on the servo pit pattern surface of the substrate.
A material having high reflectance for the informing light and reference light is preferably employed as the material of the reflective film. When the wavelength of the light employed as the informing light and reference light ranges from 400 to 780 nm, examples of desirable materials are Al, Al alloys, Ag, and Ag alloys. When the wavelength of the light employed as the informing light and reference light is equal to or greater than 650 nm, examples of desirable materials are Al, Al alloys, Ag, Ag alloys, Au, Cu alloys, and TiN.
By employing an optical recording medium that reflects light as well as can be recorded and/or erased information such as a DVD (digital video disk) as a reflective film, it is possible to record and rewrite directory information, such as the areas in which holograms have been recorded, when rewriting was conducted, and the areas in which errors are present and for which alternate processing has been conducted, without affecting the hologram.

The method of forming the reflective film is not specifically limited and may be suitably selected based on the objective. Various vapor phase growth methods such as vacuum deposition, sputtering, plasma CVD, optical CVD, ion plating, and electron beam vapor deposition may be employed. Of these, sputtering is superior from the perspectives of mass production, film quality, and the like.
The thickness of the reflective film is preferably equal to or greater than 50 nm, more preferably equal to or greater than 100 nm, to obtain adequate reflectance.

### - Filter Layer -

A filter layer can be provided on the servo pits of the substrate, on the reflective layer, or on the first gap layer, described further below.
The filter layer has a function of reflecting selective wavelengths in which, among multiple light rays, only light of a specific wavelength is selectively reflected, permitting passing one light and reflecting a second light. It also has a function of preventing generation of noise in which irregular reflection of the informing light and the reference light by the reflective film of the recording medium is prevented without a shift in the selectively reflected wavelength even when the angle of incidence varies. Therefore, by stacking filter layers on the recording medium, it is possible to perform optical recording with high resolution and good diffraction efficiency.
The filter layer is not specifically limited and may be suitably selected based on the objective. For example, the filter layer can be comprised of a laminate in which at least one of a dichroic mirror layer, coloring material-containing layer, dielectric vapor deposition layer, single-layer or two- or more layer cholesteric layer and other layers suitably selected as needed is laminated. The thickness of the filter layer is not specifically limited and may be, for example, about 0.5 to 20 micrometers.
The filter layer may be laminated by direct application on the substrate or the like with the recording layer, or may be laminated on a base material such as a film to prepare a filter layer which is then laminated on the substrate.

### - First Gap Layer -

The first gap layer is formed as needed between the filter layer and the reflective film to flatten the surface of the lower substrate. It is also effective for adjusting the size of the hologram that is formed in the recording layer. That is, since the recording layer should form a certain size of the interference region of the recording-use reference light and the informing light, it is effective to provide a gap between the recording layer and the servo pit pattern.

For example, the first gap layer can be formed by applying a material such as an ultraviolet radiation-curing resin from above the servo pit pattern and curing it. When employing a filter layer formed by application on a transparent base material, the transparent base material can serve as the first gap layer.
The thickness of the first gap layer is not specifically limited, and can be suitably selected based on the objective. A thickness of 1 to 200 micrometers is desirable.

### - Second Gap Layer -

The second gap layer is provided as needed between the recording layer and the filter layer.
The material of the second gap layer is not specifically limited, and may be suitably selected based on the objective. Examples are: transparent resin films such as triacetyl cellulose (TAC), polycarbonate (PC), polyethylene terephthalate (PET), polystyrene (PS), polysulfone (PSF), polyvinylalcohol (PVA), and poly(methyl methacrylate) (PMMA); and norbornene resin films such as a product called ARTON film made by JSR Corporation and a product called Zeonoa made by Japan Zeon Co. Of these, those that are highly isotropic are desirable, with TAC, PC, the product called ARTON, and the product called Zeonoa being preferred.
The thickness of the second gap layer is not specifically limited and may be suitably selected based on the objective. A thickness of 1 to 200 micrometers is desirable.
Specific embodiments of the holographic recording medium of the present invention will be described in greater detail below. However, the present invention is not limited to these specific embodiments.

### <First implementation embodiment>

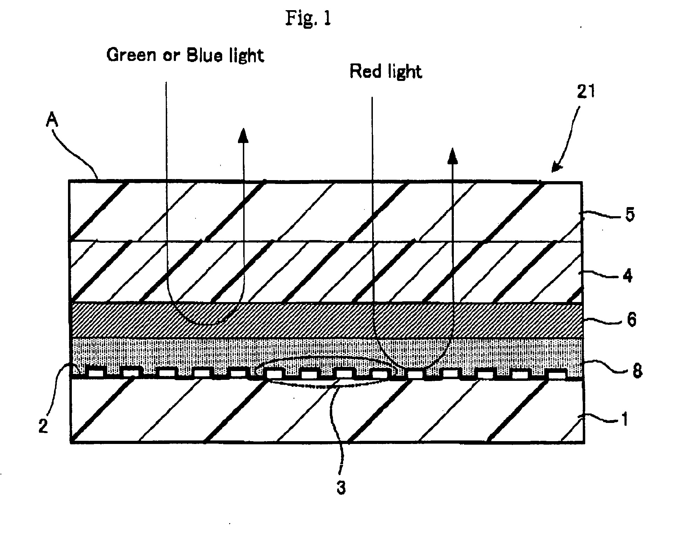

Fig. 1 is a schematic cross-sectional view of the configuration of the holographic recording medium according to the first implementation embodiment. In holographic recording medium 21 according to the first implementation embodiment, a servo pit pattern 3 is formed on substrate 1 made of polycarbonate resin or glass, and aluminum, gold, platinum, or the like is coated on servo pit pattern 3 to provide reflective film 2. In Fig. 1, servo pit pattern 3 has been formed over the entire surface of lower substrate 1, but the servo pit pattern may be formed cyclically. Servo pit pattern 3 is normally 1,750 Angstroms (175 nm) in height, and is quite small relative to the thickness of the substrate and the other layers.

First gap layer 8 is formed by spin coating or the like a material such as an ultraviolet radiation-curing resin on reflective film 2 of lower substrate 1. First gap layer 8 is effective for both the protection of reflective layer 2 and the adjustment of the size of the hologram formed in recording layer 4. That is, providing a gap between recording layer 4 and servo pit pattern 3 is effective for the formation of an interference area for the recording·use reference light and informing light of a certain size in recording layer 4.

Filter layer 6 is provided on first gap layer 8. Recording layer 4 is sandwiched between filter layer 6 and upper substrate 5 (a polycarbonate resin substrate or glass substrate) to form holographic recording medium 21.

Fig. 1 shows a filter layer 6 that passes only infrared radiation and blocks light of all other colors. Accordingly, since the informing light and recording and reproducing-use reference light are blue, they are blocked by filter layer 6 and do not reach reflective film 2. They return, exiting from entry and exit surface A.
Filter layer 6 is a multilayered vapor deposition film comprised of high refractive index layers and low refractive index layers deposited in alternating fashion.
Filter layer 6, comprised of a multilayered vapor deposition film, may be formed directly on first gap layer 8 by vacuum vapor deposition, or a film comprised of a multilayered vapor deposition film formed on a base material may be punched into the shape of a holographic recording medium to employed as filter layer 6.

In this embodiment, holographic recording medium 21 may be disk-shaped or card-shaped. When card-shaped, the servo pit pattern may bo absent. In holographic recording medium 21, the lower substrate is 0.6 mm, first gap layer 8 is 100 micrometers, filter layer 6 is 2 to 3 micrometers, recording layer 4 is 0.6 mm, and upper substrate 5 is 0.6 mm in thickness, for a total thickness of about 1.9 mm.

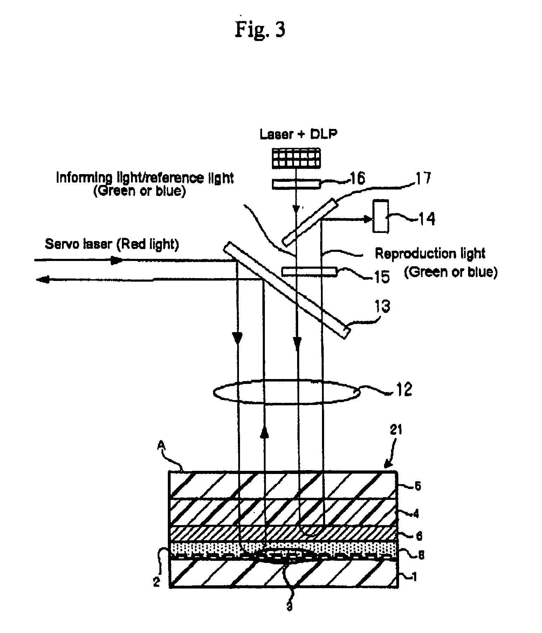

An optical system applicable for the recording of information on and the reproduction of information from holographic recording medium 21 will be described with reference to Fig. 3.
First, a light (red light) emitted by a servo laser is nearly 100 percent reflected by dichroic mirror 13, passing through objective lens 12. Objective lens 12 directs the servo light onto holographic recording medium 21 so that it focuses at a point on reflective film 2. That is, dichroic mirror 13 passes light of green and blue wavelengths while reflecting nearly 100 percent of red light The servo light entering entry and exit surface A to which and from which the light enters and exits of holographic recording medium 21 passes through upper substrate 5, recording layer 4, filter layer 6, and first gap layer 8, is reflected by reflective layer 2, and passes back through first gap layer 8, filter layer 6, recording layer 4, and upper substrate 5, exiting entry and exit surface A. The returning light that exits passes through objective lens 12, is nearly 100 percent reflected by dichroic mirror 13, and the servo information is detected by a servo information detector (not shown in Fig. 3). The servo information that is detected is employed for focus servo, tracking servo, slide servo, and the like. When the hologram material included in recording layer 4 is not sensitive to red light, the servo light passes through recording layer 4 without affecting recording layer 4, even when the servo light is randomly reflected by reflective film 2. Since the light in the form of the servo light reflected by reflective film 2 is nearly 100 percent reflected by dichroic mirror 13, the servo light is not detected by a CMOS sensor or CCD 14 for reproduction image detection and thus does not constitute noise to the reproduction light.

The informing light and recording-use reference light generated by the recording/reproducing laser passes through polarizing plate 16 and is linearly polarized. It then passes through half mirror 17, becoming circularly polarized light at the point where it passes through 1/4 wavelength plate 15. The light then passes through dichroic mirror 13, and is directed by objective lens 12 onto holographic recording medium 21 so that the informing light and rocording-use reference light form an interference pattern In recording layer 4. The informing light and recording-use reference light enter through entry and exit surface A, interfering with each other to form an interference pattern In recording layer 4. Subsequently, the informing light and recording-use reference light pass through recording layer 4, entering filter layer 6. However, they are reflected before reaching the bottom surface of filter layer 6, returning. That is, neither the informing light nor the recording-use reference light reaches reflective film 2. That is because filter layer 6 is a multilayered vapor deposition layer in which multiple high refractive index and low refractive index layers are alternatively laminated, and has the property of passing only red light.

### <Second implementation embodiment>

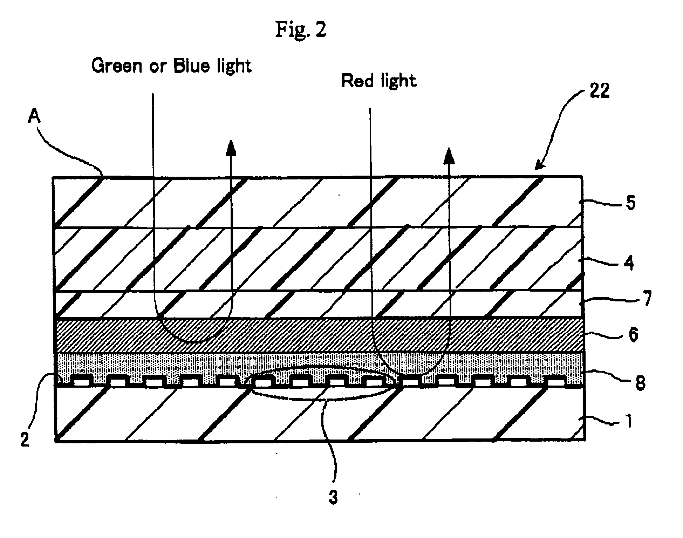

Fig. 2 is a schematic cross-sectional view of the configuration of the holographic recording medium according to the second implementation embodiment. A servo pit pattern 3 is formed on substrate 1 made of polycarbonate resin or glass in the holographic recording medium 22 accoding to the second implementation embodiment. Reflective film 2 is provided by coating aluminum, gold, platinum, or the like on the surface of servo pit pattern 3. Servo pit pattern 3 is normally 1,750 Angstroms (175 nm) in height in the same manner as in the first implementation embodiment.

The configuration of the second implementation embodiment differs from that of the first implementation embodiment in that second gap layer 7 is provided between filter layer 6 and recording layer 4 in holographic recording medium 22 according to the second implementation embodiment. A point at which the informing light and reproduction light are focused is present in second gap layer 7. When this area is embedded in a photopolymer, excessive consumption of monomer occurs due to excess exposure, and multiplexing recording capability diminishes. Accordingly, it is effective to provide a nonreactive transparent second gap layer.

Filter layer 6 in the form of a multilayered vapor deposition film comprised of multiple layers in which multiple high refractive index and low refractive index layers are alternately laminated is formed over first gap layer 8 once first gap layer 8 has been formed, and the same one as employed in the first implementation embodiment can be employed as filter layer 6 in the second implementation embodiment.

In holographic recording medium 22 of the second implementation embodiment, lower substrate 1 is 1.0 mm, first gap 8 is 100 micrometers, filter layer 6 is 3 to 5 micrometers, second gap layer 7 is 70 micrometers, recording layer 4 is 0.6 mm, and upper substrate 5 is 0.4 mm in thickness, for a total thickness of about 2.2 mm.

When recording or reproducing information, a red servo light and a green informing light and recording/reproducing reference light are directed onto holographic recording medium 22 of the second implementation embodiment having the configuration set forth above. The servo light enters through entry and exit surface A, passing through recording layer 4, second gap layer 7, filter layer 6, and first gap layer 8, and is reflected by reflective film 2, returning. The returning light then passes sequentially back through first gap layer 8, filter layer 6, second gap layer 7, recording layer 4, and upper substrate 5, exiting through entry and exit surface A. The returning light that exits is used for focus servo, tracking servo, and the like. When the hologram material included in recording layer 4 is not sensitive to red light, the servo light passes through recording layer 4 and is randomly reflected by reflective film 2 without affecting recording layer 4. The green informing light and the like enters through entry and exit surface A, passing through recording layer 4 and second gap layer 7, and is reflected by filter layer 6, returning. The returning light then passes sequentially back through second gap layer 7, recording layer 4, and upper substrate 5, exiting through entry and exit layer A. During reproduction, as well, the reproduction-use reference light and the reproduction light generated by irradiating the reproduction-use reference light onto recording layer 4 exit through entry and exit surface A without reaching reflective film 2. The optical action around holographic recording medium 22 (objective lens 12, filter layer 6, and detectors in the form of CMOS sensors or CCD 14 in Fig. 3) is identical to that in the first implementation embodiment and thus the description thereof is omitted.

The method of recording information on the holographic recording medium of the present invention will be described below.

An interference image can be formed on the recording layer formed with the optical recording composition of the present invention by irradiation of an informing light and a reference light to the recording layer, and a fixing light can be irradiated to the recording layer on which the interference image has been formed to fix the interference image.

A light having coherent properties can be employed as the informing light. By irradiating the informing light and reference light onto the recording medium so that the optical axes of the informing light and reference light are coaxial, it is possible to record in the recording layer an interference image generated by interference of the informing light and reference light. Specifically, a informing light imparted with a two dimensional intensity distribution and a reference light of intensity nearly identical to that of the informing light are superposed in the recording layer and the interference pattern that they form is used to generate an optical characteristic distribution in the recording layer, thereby recording information. The wavelengths of the informing light and reference light are preferably equal to or greater than 400 nm, more preferably 400 to 2,000 nm, and further preferably, 400 to 700 nm.

After recording information (forming an interference image) by irradiating the informing light and reference light, a fixing light can be irradiated to fix the interference image. The wavelength of the fixing light is preferably less than 400 nm, more preferably equal to or greater than 100 nm but less than 400 nm, and further preferably, equal to or greater than 200 nm but less than 400 nm.

Information can be reproduced by irradiating a reference light onto an interference image formed by the above-described method. In the course of reading (reproducing) information that has been written, just a reference light is irradiated onto the recording layer with the same arrangement as during recording, causing a reproduction light having an intensity distribution corresponding to the optical characteristic distribution formed in the recording layer to exit the recording layer.

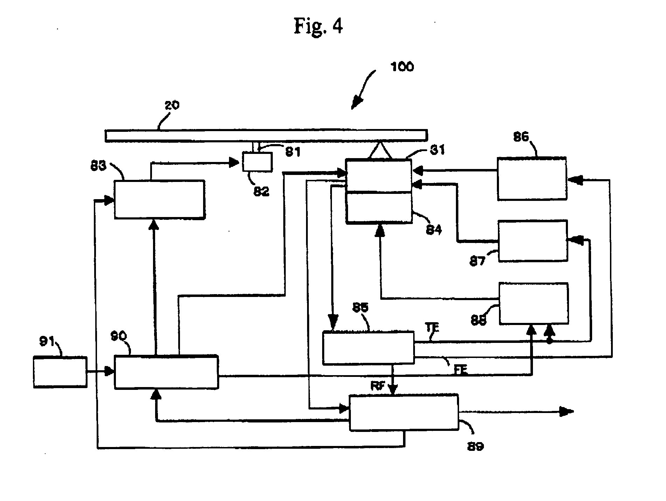

An optical recording and reproducing device suited to use in the recording and reproducing of information in the holographic recording medium of the present invention will be described with reference to Fig. 4.
The optical recording and reproducing device 100 of Fig. 4 is equipped with spindle 81 on which is mounted holographic recording medium 20, spindle motor 82 rotating spindle 81, and spindle servo circuit 83 controlling spindle motor 82 so that it maintains holographic recording medium 20 at a prescribed rpm level.

Recording and reproducing device 100 is further equipped with pickup 31 for recording information by irradiating a informing light and a recording-use reference light onto holographic recording medium 20, and for reproducing information that has been recorded on holographic recording medium 20 by irradiating a reproducing-use reference light onto holographic recording medium 20 and detecting the reproduction light; and driving device 84 capable of moving pickup 31 radially with respect to holographic recording medium 20.

Optical recording and reproducing device 100 is equipped with detection circuit 85 for detecting focus error signal FE, tracking error signal TE, and reproduction signal RF based on the output signals of pickup 31; focus servo circuit 86 that operates a focus servo by driving an actuator in pickup 31 to move an objective lens (not shown in Fig. 4) in the direction of thickness of holographic recording medium 20 based on focus error signal FE detected by detection circuit 85; tracking servo circuit 87 that operates a tracking servo by driving an actuator in pickup 31 to move an objective lens in the radial direction of holographic recording medium 20 based on tracking error signal TE detected by detection circuit 85; and slide servo circuit 88 that operates a slide servo by controlling drive device 84 to move pickup 31 In the radial direction of holographic recording medium 20 based on Instructions from a controller, described further below, and tracking error signal TE.

Optical recording and reproducing device 100 is further equipped with signal processing circuit 89 that decodes the output data of a CCD array or CMOS in pickup 31 to reproduce data recorded in the data areas of holographic recording medium 20, reproduces a base clock based on reproduction signal RF from detection circuit 85, and determines addresses; controller 90 that effects overall control of optical recording and reproducing device 100; and operation element 91 providing various instructions to controller 90. Controller 90 inputs the base clock and address information outputted by signal processing circuit 89 and controls pickup 31, spindle servo circuit 83, slide servo circuit 88, and the like. Spindle servo circuit 83 inputs the base clock that is outputted by signal processing circuit 89. Controller 90 comprises a central processing unit (CPU), read only memory (ROM), and random access memory (RAM). The functions of controller 90 can be realized by having the CPU that employs the RAM as a work area and execute programs stored in the ROM.

### EXAMPLES

The present invention will be described in detail below based on examples. However, the present invention is not limited to the examples,

### <Synthesis examples>

Example compounds M-14, M-16, M-19, and M-20 were synthesized by the scheme below according to the methods described in Macromol. Rapid Commun. 2003, 24, 269; Macrom. Mater. Eng. 2006, 291, 83; Adv. Synth. Catal. 2006, 348, 2133.

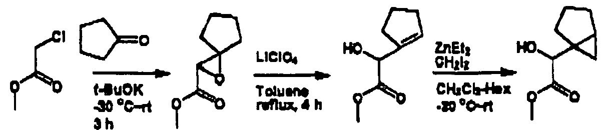

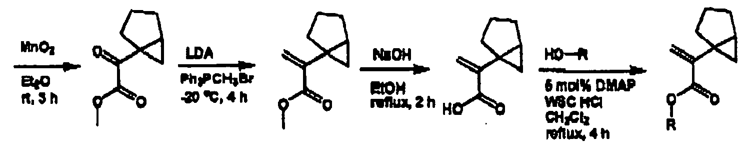

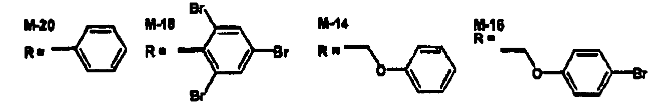

The identification results are given below. The various bicyclic cyclopropane derivatives denoted by General Formula (I) can be synthesized by the same or similar methods.

<M-20>
¹H NMR (300 MHz, CDCl₃) 80.69∼0.78 (m, 2H), 1.22∼1.36 (m, 2H), 1.49∼1.58 (m, 2H), 1.63∼1.72 (m, 1H), 1.74∼1.81 (m, 2H), 1.89∼1.95 (m, 2H), 5.78 (s, 1H), 6.37 (s, 1H), 7.13 (dd ,2H), 7.20∼7.29 (m, 1H), 7.38∼7.42 (m, 2H)

<M-18>
¹H NMR (300 MHz, CDCl₃) δ 0.72∼0.84 (m, 2H), 1.22∼1.37 (m, 2H), 1.52∼1.82 (m, 3H), 1.84∼2.04 (m, 3H), 5.87 (s, 1H), 6.46 (s, 1H), 7.71 (s ,2H)

<M.14>
¹H NMR (300 MHz, CDCl₃) δ 0.62~0.70 (m, 2H), 1.16~1.26 (m, 2H), 1.42~1.49 (m, 1H), 1.53~1,64 (m, 1H), 1.70~1.77 (m, 1H), 1.82~1.92 (m, 2H), 4.22 (t, 2H), 4.48 (t, 2H), 5.60 (s, 1H), 6.18 (s, 1H), 6.89~6.99 (m, 3H), 7.24~7.32 (m, 2H)

<M-16>
¹H NMR (300 MHz, CDCl₃) δ 0.62~0.69 (m, 1H), 0.82~0.93 (m, 1H), 1.19~1.32 (m, 2H), 1.43~1.49 (m, 1H), 1.53~1.67 (m, 1H), 1.80~1.91 (m, 2H), 4.19 (t, 2H), 4.49 (t, 2H), 5.62 (s, 1H), 6.13 (s, 1H), 6.80 (d, 2H), 7.39 (d, 2H)

<Test of holographic recording properties>

### Example 1

### - Preparation of Holographic Recording Composition -

A 31.5 g quantity of biscyclohexylmethane diisocyanate, 61.2 g of polypropyleneoxidetriol (molecular weight 1,000), 2.5 g of tetramethylene glycol, 3.1 g of Example compound M-9, 0.69 g of optical polymerization initiator in the form of (bis(η5-2,4-cyclopentadiene-1-yl)-bis(2,6-diFLuoro-3-(1H-pyrrole-1-yl)phenyl)titanium) (Irgacure 784, made by Chiba Specialty Chemicals), and 1.01 g of dibutyl tin dilaurate were admixed under a nitrogen gas flow to prepare a holographic recording composition.

### Example 2

### - Preparation of Holographic Recording Composition -

With the exception that Example compound M-18 was employed instead of Example compound M-9 in Example 1, a holographic recording composition was prepared in the same manner as in Example 1.

### Example 3

### - Preparation of Holographic Recording Composition -

With the exception that Example compound M-20 was employed instead of Example compound M-9 in Example 1, a holographic recording composition was prepared in the same manner as in Example 1.

### Example 4

### - Preparation of Holographic Recording Composition -

With the exception that Example compound M-30 was employed instead of Example compound M-9 in Example 1, a holographic recording composition was prepared in the same manner as in Example 1.

### Example 5

### - Preparation of Holographic Recording Composition -

With the exception that Example compound M-16 was employed instead of Example compound M-9 in Example 1, a holographic recording composition was prepared in the same manner as in Example 1.

### Comparative Example 1

### - Preparation of Holographic Recording Composition -

A 31.5 g quantity of biscyclohexylmethane diisocyanate, 61.2 g of polypropyleneoxidetriol (molecular weight 1,000), 2.5 g of tetramethylene glycol, 3.1 g of monomer in the form of Comparative compound R-1 below (2,4,6-tribromophenyl acrylate), 0.69 g of optical polymerization initiator (Irgacure 784, made by Chiba Specialty Chemicals), and 1.01 g of dibutyl tin dilaurate were admixed under a nitrogen gas flow to prepare a holographic recording composition.

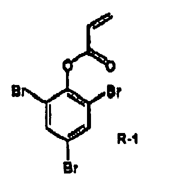

### Comparative Example 2

### - Preparation of Holographic Recording Composition -

A 31.5 g quantity of biscyclohexylmethane diisocyanate, 61.2 g of polypropyleneoxidetriol (molecular weight 1,000), 2.5 g of tetramethylene glycol, 3.1 g of monomer in the form of Comparative compound R-2 below, 0.69 g of optical polymerization initiator (Irgacure 784, made by Chiba Specialty Chemicals), and 1.01 g of dibutyl tin dilaurate were admixed under a nitrogen gas flow to prepare a holographic recording composition.

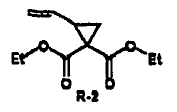

### Examples 6 to 10, Comparative Examples 3 and 4

### - Preparation of Holographic Recording Medium -

A first substrate was prepared by subjecting one side of a glass sheet 0.5 mm in thickness to an antireflective treatment to impart a reflectance of 0.1 percent for perpendicularly incident light with the wavelength of 532 nm,
A second substrate was prepared by subjecting one side of a glass sheet 0.5 mm in thickness to an aluminum vapor deposition treatment to impart a reflectance of 90 percent for perpendicularly incident light with the wavelength of 532 nm.
A transparent polyethylene terephthalate sheet 500 micrometers in thickness was provided as a spacer on the side of the first substrate that had not been subjected to the antireflective treatment.
The holographic recording compositions of Examples 1 to 3 and Comparative Examples 1 and 2 were each separately placed on first substrates, the aluminum vapor deposited surface of the second substrates were stacked on the holographic recording composition in such a manner that air was not entrained, and the first and second substrates were bonded through the spacer. The holographic recording layer was left standing for 24 hours at 45°C to prepare the holographic recording media of Examples 1 to 3 and Comparative Examples 3 and 4. The holographic recording layer formed was 200 micrometers in thickness.

### <Recording in the Holographic Recording Medium and Evaluation>

Employing a collinear hologram recording and reproduction tester (SHOT-1000, made by Pulsetec Industrial Co., Ltd.), a series of multiplexed holograms was written into the various optical recording media that had been prepared at a spot recording diameter of 200 micrometers at the focal position of the recording hologram, and the sensitivity (recording energy) and level of multiplexing were measured and evaluated as follows. The results are given in Table 1.

### - Sensitivity Measurement -

The beam energy during recording (mJ/cm²) was varied and the change in the error rate (BER: bit error rate) of the reproduced signal was measured. Normally, there is such a tendency that the luminance of the reproduced signal increases and the BER of the reproduced signal gradually drops with an increase in the irradiated light energy. In the measurement, the lowest light energy at which a fairly good reproduced image (BER < 10⁻³) was obtained was adopted as the recording sensitivity of the holographic recording medium.

### - Evaluation of the level of multiplexing -

The evaluation method whereby recorded spots are spirally shifted that is described in ISOM' 04, Th-J-06, pp. 184-185, Oct. 2004, was employed as a method of evaluating the level of multiplexing for each of the optical recording media obtained. The number of holograms recorded was 13 x 13 = 169 and the recording pitch was 28.5 micrometers. The multiplicity during the recording of the final (169th) hologram was 49. Since the multiplicity increased with the number of holograms recorded, an Inadequate multiplexing property in the optical recording medium causes an increase in the BER as the number of recordings increased. The number of holograms recorded when BER > 10⁻³ was reached was adopted as the multiplexing characteristic M of the optical recording medium.

**Table 1**

| | Holographic recording composition | Recording sensitivity | Multiplexing characteristic M |
|---|---|---|---|
| Example 6 | Example 1 | 35mJ/cm² | 169 |
| Example 7 | Example 2 | 22mJ/cm² | 169 |
| Example 8 | Example 3 | 20mJ/cm² | 169 |
| Example 9 | Example 4 | 15mJ/cm² | 169 |
| Example 10 | Example 5 | 18mJ/cm² | 169 |
| Comp. Ex. 3 | Comp. Ex. 1 | 80mJ/cm² | 70 |
| Comp. Ex. 4 | Comp. Ex. 2 | 500mJ/cm² | 60 |

Table 1 reveals that the optical recording media of Examples 6 to 10, in which the holographic recording compositions of Examples 1 to 5 were employed, all exhibited better recording sensitivity than the optical recording media of Comparative Examples 3 and 4, in which the holographic recording compositions of Comparative Examples 1 and 2 were employed, as well as exhibiting good multiplexing properties.

The holographic recording composition of the present invention is capable of high density recording, and is thus suitable for use in the manufacturing of various volume hologram-type optical recording media capable of high-density Image recording.

Although the present invention has been described in considerable detail with regard to certain versions thereof, other versions are possible, and alterations, permutations and equivalents of the version shown will become apparent to those skilled in the art upon a reading of the specification and study of the drawings. Also, the various features of the versions herein can be combined in various ways to provide additional versions of the present invention. Furthermore, certain terminology has been used for the purposes of descriptive clarity, and not to limit the present invention. Therefore, any appended claims should not be limited to the description of the preferred versions contained herein and should include all such alterations, permutations, and equivalents as fall within the true spirit and scope of the present invention.

Having now fully described this invention, it will be understood to those of ordinary skill in the art that the methods of the present invention can be carried out with a wide and equivalent range of conditions, formulations, and other parameters without departing from the scope of the invention or any embodiments thereof.

Unless otherwise stated, a reference to a compound or component includes the compound or component by itself, as well as in combination with other compounds or components, such as mixtures of compounds.

As used herein, the singular forms "a," "an," and "the" include the plural reference unless the context clearly dictates otherwise.

## Claims

1. An optical recording composition comprising a bicyclic cyclopropane derivative denoted by General Formula (1). 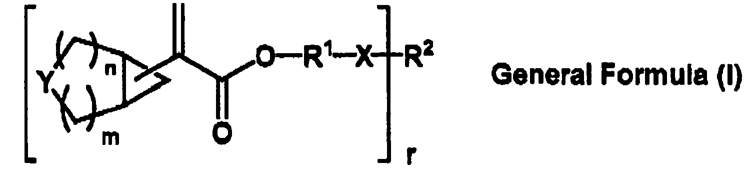 In General Formula (I), R¹ denotes an alkylene group or arylene group, R² denotes an alkyl group, aryl group, or heterocyclic group, X denotes a divalent linking group selected from the group consisting of -COO-, -CONH-, -OCO-, -NH-, -O-, -S-, -CO-, -SO₂-, -SO₃-, and -SO₂NH-, n and m each independently denote an integer ranging from 0 to 8, with n+m being an integer ranging from 0 to 8, Y denotes a divalent linking group selected from the group consisting of -CR³R⁴-, -O- and -S-, R³ and R⁴ each independently denote a hydrogen atom, alkyl group, aryl group, alkoxycarbonyl group, or aryloxycarbonyl group, r denotes an integer ranging from 1 to 4, wherein there may be a case in which R¹ and X are absent, and R² is directly bound to an oxygen atom in the case.

2. The optical recording composition of claim 1, wherein the bicyclic cyclopropane derivative denoted by General Formula (1) is a bicyclic cyclopropane derivative denoted by General Formula (II). 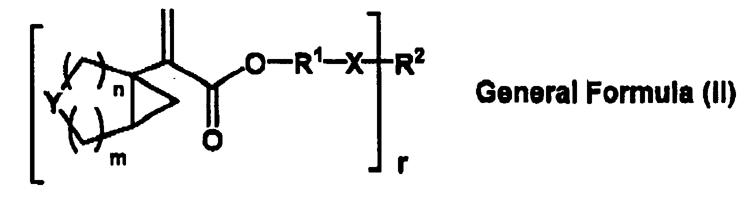 In General Formula (II), each of R¹, R², Y, n, m, and r is defined in the same manner as in General Formula (I).

3. The optical recording composition of claim 1 or 2, wherein r denotes an integer ranging from 2 to 4.

4. The optical recording composition of any of claims 1 to 3, wherein R¹ or R² denotes an aryl group.

5. The optical recording composition of any of claims 1 to 4, further comprising a thermosetting compound.

6. The optical recording composition of claim 5, wherein the thermosetting compound comprises a polyfunctional isocyanate and a polyfunctional alcohol.

7. The optical recording composition of any of claims 1 to 6, further comprising an optical radical polymerization initiator,

8. The optical recording composition of any of claims 1 to 7, which is a holographic recording composition.

9. A holographic recording medium comprising a recording layer, wherein the recording layer is formed with the optical recording composition of any of claims 1 to 8.

## Patentansprüche

1. Zusammensetzung für die optische Aufzeichnung, umfassend ein bicyclisches Cyclopropanderivat, dargestellt durch die allgemeine Formel (I): 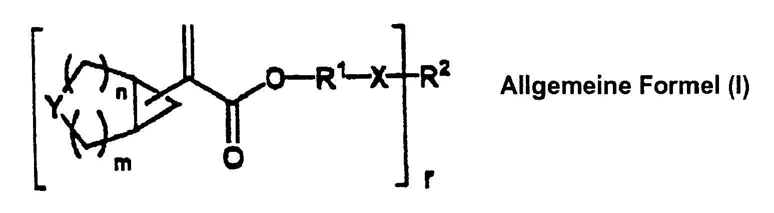 in der allgemeinen Formel (I) bezeichnet R¹ eine Alkylengruppe oder Arylengruppe, R² bezeichnet eine Alkylgruppe, Arylgruppe oder heterocyclische Gruppe, X bezeichnet eine divalente Verknüpfungsgruppe, ausgewählt aus der Gruppe bestehend aus -COO-, -CONH-, -OCO-, -NH-, -O-, -S-, -CO-, -SO₂-, -SO₃- und -SO₂NH-, n und m bezeichnen jeweils unabhängig voneinander eine ganze Zahl im Bereich von 0 bis 8, wobei n+m eine ganze Zahl im Bereich von 0 bis 8 ist, Y bezeichnet eine divalente Verknüpfungsgruppe, ausgewählt aus der Gruppe bestehend aus -CR³R⁴-, -O- und -S-, R³ und R⁴ bezeichnen jeweils unabhängig voneinander ein Wasserstoffatom, eine Alkylgruppe, Arylgruppe, Alkoxycarbonylgruppe oder Aryloxycarbonylgruppe, r bezeichnet eine ganze Zahl im Bereich von 1 bis 4, worin es Fälle geben kann, worin R¹ und X nicht vorliegen, und in diesem Fall ist R² direkt an ein Sauerstoffatom gebunden.

2. Zusammensetzung für die optische Aufzeichnung gemäß Anspruch 1, worin das bicyclische Cyclopropanderivat, das durch die allgemeine Formel (I) dargestellt ist, ein bicyclisches Cyclopropanderivat ist, das durch die allgemeine Formel (II) dargestellt wird: 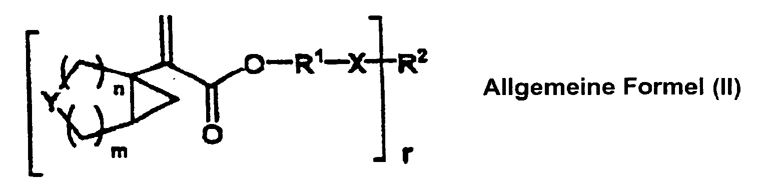 in allgemeiner Formel (II) sind jedes von R¹, R², Y, n, m und r auf die gleiche Weise wie in der Formel (I) definiert.

3. Zusammensetzung für die optische Aufzeichnung gemäß Anspruch 1 oder 2, worin r eine ganze Zahl im Bereich von 2 bis 4 bezeichnet.

4. Zusammensetzung für die optische Aufzeichnung gemäß irgendeinem der Ansprüche 1 bis 3, worin R¹ oder R² eine Arylgruppe bezeichnet.

5. Zusammensetzung für die optische Aufzeichnung gemäß irgendeinem der Ansprüche 1 bis 4, ferner umfassend eine duroplastische Verbindung.

6. Zusammensetzung für die optische Aufzeichnung gemäß Anspruch 5 , worin die duroplastische Verbindung ein polyfunktionales Isocyanat und einen polyfunktionalen Alkohol umfasst.

7. Zusammensetzung für die optische Aufzeichnung gemäß irgendeinem der Ansprüche 1 bis 6, ferner umfassend einen optischen Radikalpolymerisationsinitiator.

8. Zusammensetzung für die optische Aufzeichnung gemäß irgendeinem der Ansprüche 1 bis 7, welche eine Zusammensetzung für die holographische Aufzeichnung ist.

9. Medium für die holographische Aufzeichnung, umfassend eine Aufzeichnungsschicht, worin die Aufzeichnungsschicht mit der Zusammensetzung für die optische Aufzeichnung gemäß irgendeinem der Ansprüche 1 bis 8 gebildet ist.

## Revendications

1. Composition d'enregistrement optique comprenant un dérivé de cyclopropane bicylique indiqué par la formule générale (I) 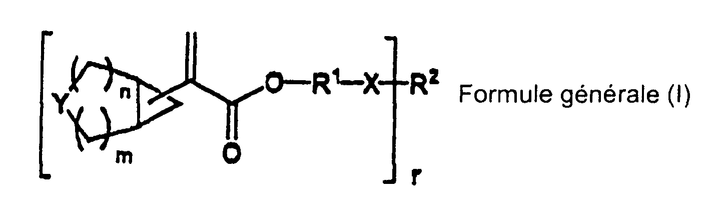 dans la formule générale (I), R¹ indique un groupe alkylène ou un groupe arylène, R² indique un groupe alkyle, un groupe aryle ou un groupe hétérocyclique, X indique un groupe de liaison divalent choisi dans le groupe constitué de -COO-, -CONH-, -OCO-, -NH-, -O-, -S-, -CO-, -SO₂-, -SO₃- et -SO₂NH-, n et m indiquent chacun indépendamment un nombre entier de 0 à 8, avec n+m étant un nombre entier de 0 à 8, Y indique un groupe de liaison divalent choisi dans le groupe constitué de -CR³R⁴-, -O-, et -S-, R³ et R⁴ indiquent chacun indépendamment un atome d'hydrogène, un groupe alkyle, un groupe aryle, un groupe alcoxycarbonyle ou un groupe aryloxycarbonyle, r indique un nombre entier de 1 à 4, où il peut y avoir un cas dans lequel R¹ et X sont absents, et R² est directement lié à un atome d'oxygène dans ce cas.

2. Composition d'enregistrement optique selon la revendication 1, dans laquelle le dérivé de cyclopropane bicyclique indiqué par la formule générale (I) est un dérivé de cyclopropane bicyclique indiqué par la formule générale (II). 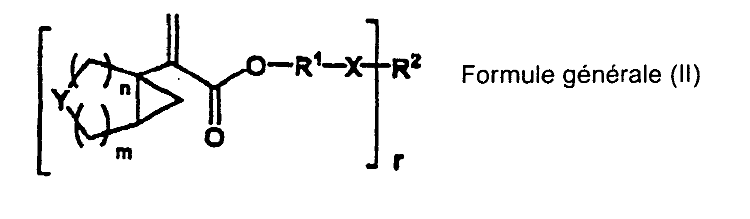 dans la formule générale (II), chacun de R¹, R² Y, n, m et r est défini de la même manière que dans la formule générale (I).

3. Composition d'enregistrement optique selon la revendication 1 ou 2, dans laquelle r indique un nombre entier de 2 à 4.

4. Composition d'enregistrement optique selon l'une quelconque des revendications 1 à 3, dans laquelle R¹ ou R² indique un groupe aryle.

5. Composition d'enregistrement optique selon l'une quelconque des revendications 1 à 4, comprenant de plus un composé thermodurcissable.

6. Composition d'enregistrement optique selon la revendication 5, dans laquelle le composé thermodurcissable comprend un isocyanate polyfonctionnel et un alcool polyfonctionnel.

7. Composition d'enregistrement optique selon l'une quelconque des revendications 1 à 6, comprenant de plus un initiateur de polymérisation radicalaire optique.

8. Composition d'enregistrement optique selon l'une quelconque des revendications 1 à 7, laquelle est une composition d'enregistrement holographique.

9. Support d'enregistrement holographique comprenant une couche d'enregistrement, dans lequel la couche d'enregistrement est formée avec la composition d'enregistrement optique selon l'une quelconque des revendications 1 à 8.
